# EUROPEAN PATENT SPECIFICATION

(11) **EP 2 708 027 B1**
(45) Date of publication and mention of the grant of the patent: **25.12.2019**
(21) Application number: 12781762.5
(22) Date of filing: 19.04.2012
(51) Int. Cl.: H04N 19/46, H04N 19/134, H04N 19/117, H04N 19/132, H04N 19/182, H04N 19/80, H04N 19/82, H04N 19/423, H04N 19/86

(54) **METHOD AND APPARATUS FOR REDUCTION OF IN-LOOP FILTER BUFFER**
VERFAHREN UND VORRICHTUNG ZUR REDUKTION EINES IN-LOOP-FILTERPUFFERS
PROCÉDÉ ET APPAREIL POUR UNE RÉDUCTION DE TAMPON DE FILTRE EN BOUCLE

(30) Priority: 10.05.2011 US 201161484449 P; 17.06.2011 US 201161498265 P; 09.08.2011 US 201161521500 P; 19.08.2011 US 201161525442 P; 09.09.2011 US 201161532958 P; 04.10.2011 US 201161543199 P
(43) Date of publication of application: 19.03.2014
(73) Proprietor: MediaTek Inc., Hsin-Chu 300 (TW)
(72) Inventor: HUANG, Yu-Wen, Taipei City (TW); TSAI, Chia-Yang, New Taipei City (TW); CHEN, Ching-Yeh, Taipei City (TW); FU, Chih-Ming, Hsinchu City (TW); LEI, Shaw-Min, Zhubei City Hsinchu County (TW)
(74) Representative: Hoefer & Partner Patentanwälte mbB
(86) International application number: PCT/CN2012/074354
(87) International publication number: WO 2012/152174

(56) References cited:
- CN-A- 1 867 075
- US-A1- 2005 013 494
- US-A1- 2005 084 012
- C-Y CHEN ET AL: "Adaptive Loop Filter with Zero Pixel Line Buffers for LCU-based Decoding", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F054, 1 July 2011 (2011-07-01), XP030009077,
- C-M FU ET AL: "Sample Adaptive Offset with Zero Pixel Line Buffers for LCU-based Decoding", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F055, 1 July 2011 (2011-07-01), XP030009078,
- C-M FU ET AL: "CE8.c.2: Single-source SAO and ALF virtual boundary processing", 98. MPEG MEETING; 28-11-2011 - 2-12-2011; GENEVA; (MOTION PICTURE EXPERT GROUP OR ISO/IEC JTC1/SC29/WG11),, no. m21763, 21 November 2011 (2011-11-21), XP030050326,
- C-Y CHEN ET AL: "CE8.c.3: Multi-source SAO and ALF virtual boundary processing", 98. MPEG MEETING; 28-11-2011 - 2-12-2011; GENEVA; (MOTION PICTURE EXPERT GROUP OR ISO/IEC JTC1/SC29/WG11),, no. m21764, 21 November 2011 (2011-11-21), XP030050327,
- SEMIH ESENLIK ET AL: "Line Memory Reduction for ALF Decoding", 20110310, no. JCTVC-E225, 10 March 2011 (2011-03-10) , XP030008731, ISSN: 0000-0007
- CHONG I S ET AL: "CE8 Subtest 2: Block based adaptive loop filter", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-E323, 11 March 2011 (2011-03-11) , XP030008829, ISSN: 0000-0005

## Description

### CROSS REFERENCE TO RELATED APPLICATIONS

The present invention claims priority to U.S. Provisional Patent Application, Serial No. 61/484,449, filed May 10, 2011, entitled "Reduction of Decoder Line Buffers for SAO and ALF", U.S. Provisional Patent Application, Serial No. 61/498,265, filed June 17, 2011, entitled "Reduction of SAO and ALF Line Buffers for LCU-based Decoding", U.S. Provisional Patent Application, Serial No. 61/521,500, filed August 9, 2011, entitled "Reduction of Decoder Line Buffers for SAO and ALF", U.S. Provisional Patent Application, Serial No. 61/525,442, filed August 19, 2011, entitled "Boundary Processing for Sample Adaptive Offset or Loop Filter", U.S. Provisional Patent Application, Serial No. 61/532,958, filed September 9, 2011, entitled "Virtual Boundary Processing for Sample Adaptive Offset", and U.S. Provisional Patent Application, Serial No. 61/543,199, filed October 4, 2011, entitled "Reduction of Decoder Line Buffers for SAO and ALF". Till U.S.

### FIELD OF INVENTION

The present invention relates to video coding system. In particular, the present invention relates to method and apparatus for in-loop processing of reconstructed video according to the preambling parts of independent claims 1 and 9, respectively. Such a method and apparatus are disclosed in each of the documents XP 030008731 and XP 030008829. Further particular, the present invention related to method and apparatus for reduction of SAO and ALF line buffers associated with a video encoder or decoder.

### BACKGROUND OF THE INVENTION

Motion estimation is an effective inter-frame coding technique to exploit temporal redundancy in video sequences. Motion-compensated inter-frame coding has been widely used in various international video coding standards The motion estimation adopted in various coding standards is often a block-based technique, where motion information such as coding mode and motion vector is determined for each macroblock or similar block configuration. In addition, intra-coding is also adaptively applied, where the picture is processed without reference to any other picture. The inter-predicted or intra-predicted residues are usually further processed by transformation, quantization, and entropy coding to generate a compressed video bitstream. During the encoding process, coding artifacts are introduced, particularly in the quantization process. In order to alleviate the coding artifacts, additional processing has been applied to reconstructed video to enhance picture quality in newer coding systems. The additional processing is often configured in an in-loop operation so that the encoder and decoder may derive the same reference pictures to achieve improved system performance.

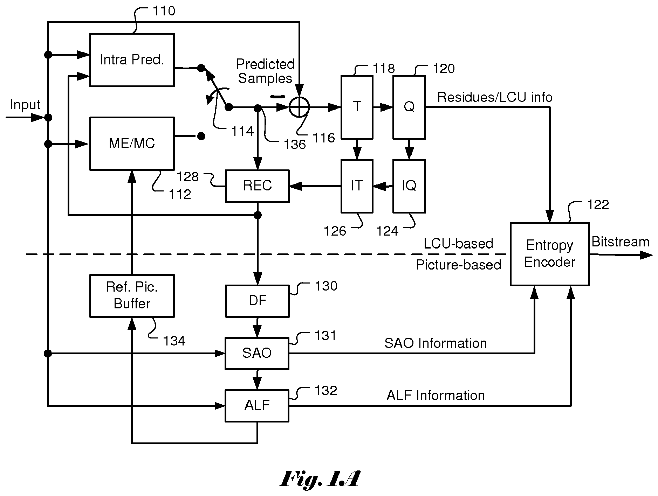

Fig. 1A illustrates an exemplary adaptive inter/intra video coding system incorporating in-loop processing. For inter-prediction, Motion Estimation (ME)/Motion Compensation (MC) 112 is used to provide prediction data based on video data from other picture or pictures. Switch 114 selects Intra Prediction 110 or inter-prediction data and the selected prediction data is supplied to Adder 116 to form prediction errors, also called residues. The prediction error is then processed by Transformation (T) 118 followed by Quantization (Q) 120. The transformed and quantized residues are then coded by Entropy Encoder 122 to form a video bitstream corresponding to the compressed video data. The bitstream associated with the transform coefficients is then packed with side information such as motion, mode, and other information associated with the image area. The side information may also be subject to entropy coding to reduce required bandwidth. Accordingly, the data associated with the side information are provided to Entropy Encoder 122 as shown in Fig. 1A. When an inter-prediction mode is used, a reference picture or pictures have to be reconstructed at the encoder end as well. Consequently, the transformed and quantized residues are processed by Inverse Quantization (IQ) 124 and Inverse Transformation (IT) 126 to recover the residues. The residues are then added back to prediction data 136 at Reconstruction (REC) 128 to reconstruct video data. The reconstructed video data may be stored in Reference Picture Buffer 134 and used for prediction of other frames.

As shown in Fig. 1A, incoming video data undergoes a series of processing in the encoding system. The reconstructed video data from REC 128 may be subject to various impairments due to a series of processing. Accordingly, various in-loop processing is applied to the reconstructed video data before the reconstructed video data are stored in the Reference Picture Buffer 134 in order to improve video quality. In the High Efficiency Video Coding (HEVC) standard being developed, Deblocking Filter (DF) 130, Sample Adaptive Offset (SAO) 131 and Adaptive Loop Filter (ALF) 132 have been developed to enhance picture quality. The in-loop filter information may have to be incorporated in the bitstream so that a decoder can properly recover the required information. Therefore, in-loop filter information from SAO and ALF is provided to Entropy Encoder 122 for incorporation into the bitstream. In Fig. 1A, DF 130 is applied to the reconstructed video first; SAO 131 is then applied to DF-processed video; and ALF 132 is applied to SAO-processed video. However, the processing order among DF, SAO and ALF can be re-arranged.

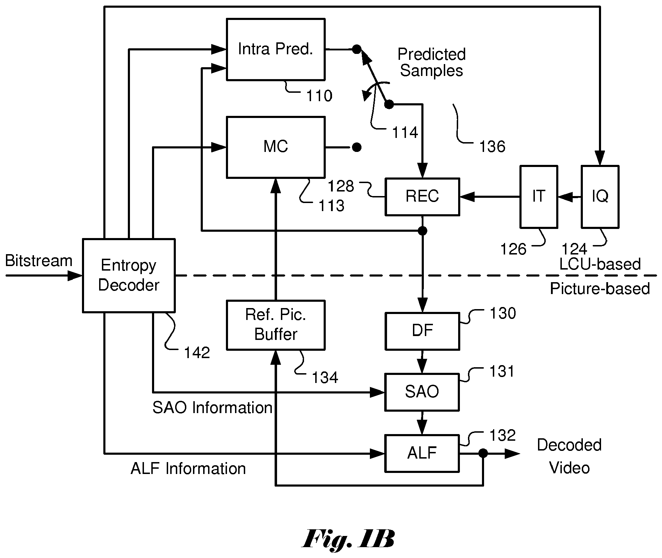

A corresponding decoder for the encoder of Fig. 1A is shown in Fig. 1B. The video bitstream is decoded by Video Decoder 142 to recover the transformed and quantized residues, SAO/ALF information and other system information. At the decoder side, only Motion Compensation (MC) 113 is performed instead of ME/MC. The decoding process is similar to the reconstruction loop at the encoder side. The recovered transformed and quantized residues, SAO/ALF information and other system information are used to reconstruct the video data. The reconstructed video is further processed by DF 130, SAO 131 and ALF 132 to produce the final enhanced decoded video.

The coding process in HEVC is applied according to Largest Coding Unit (LCU). The LCU is adaptively partitioned into coding units using quadtree. In each leaf CU, DF is performed for each 8x8 block and in HEVC Test Model Version 4.0 (HM-4.0), the DF is applies to 8x8 block boundaries. For each 8x8 block, horizontal filtering across vertical block boundaries is first applied, and then vertical filtering across horizontal block boundaries is applied. During processing of a luma block boundary, four pixels of each side are involved in filter parameter derivation, and up to three pixels on each side can be changed after filtering. For horizontal filtering across vertical block boundaries, unfiltered reconstructed pixels (i.e., pre-DF pixels) are used for filter parameter derivation and also used as source pixels for filtering. For vertical filtering across horizontal block boundaries, unfiltered reconstructed pixels (i.e., pre-DF pixels) are used for filter parameter derivation, and DF intermediate pixels (i.e. pixels after horizontal filtering) are used for filtering. For DF processing of a chroma block boundary, two pixels of each side are involved in filter parameter derivation, and at most one pixel on each side is changed after filtering. For horizontal filtering across vertical block boundaries, unfiltered reconstructed pixels are used for filter parameter derivation and are used as source pixels for filtering. For vertical filtering across horizontal block boundaries, DF processed intermediate pixels (i.e. pixels after horizontal filtering) are used for filter parameter derivation and also used as source pixel for filtering.

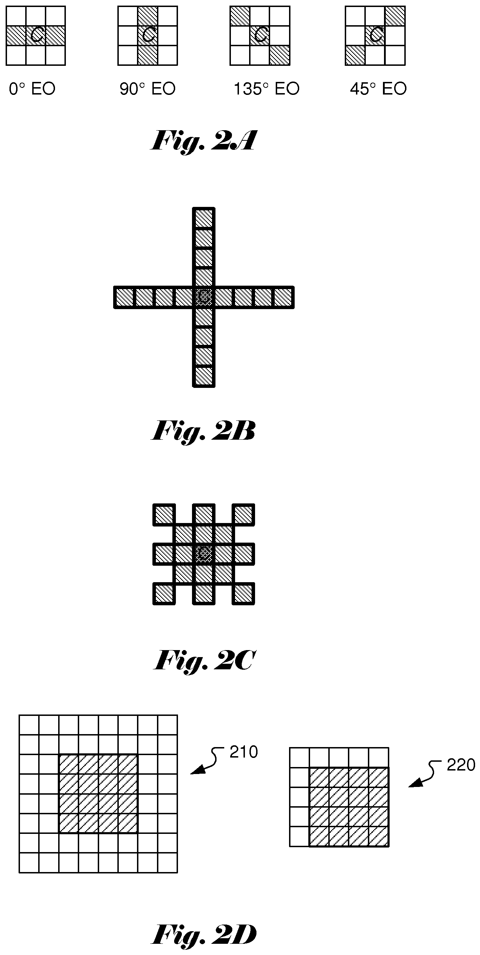

Sample Adaptive Offset (SAO) 131 is also adopted in HM-4.0, as shown in Fig. 1A. SAO can be regarded as a special case of filtering where the processing only applies to one pixel. In SAO, pixel classification is first done to classify pixels into different groups (also called categories or classes). The pixel classification for each pixel is based on a 3x3 window. Upon the classification of all pixels in a picture or a region, one offset is derived and transmitted for each group of pixels. In HM-4.0, SAO is applied to luma and chroma components, and each of the luma components is independently processed. SAO can divide one picture into multiple LCU-aligned regions, and each region can select one SAO type among two Band Offset (BO) types, four Edge Offset (EO) types, and no processing (OFF). For each to-be-processed (also called to-be-filtered) pixel, BO uses the pixel intensity to classify the pixel into a band. The pixel intensity range is equally divided into 32 bands. After pixel classification, one offset is derived for all pixels of each band, and the offsets of center 16 bands or outer 16 bands are selected and coded. As for EO, it uses two neighboring pixels of a to-be-processed pixel to classify the pixel into a category. The four EO types correspond to 0°, 90°, 135°, and 45° as shown in Fig. 2A. Similar to BO, one offset is derived for all pixels of each category except for category 0, where Category 0 is forced to use zero offset. Table 1 shows the EO pixel classification, where "C" denotes the pixel to be classified.

**Table 1.**

| Category | Condition |
|---|---|
| 1 | C < two neighbors |
| 2 | C < one neighbor && C == one neighbor |
| 3 | C > one neighbor && C == one neighbor |
| 4 | C > two neighbors |
| 0 | None of the above |

Adaptive Loop Filtering (ALF) 132 is a video coding tool in HM-4.0 to enhance picture quality, as shown in Fig. 1A. Multiple types of luma filter footprints and chroma filter footprints are used. For example, a 9x7 cross shaped filter is shown in Fig. 2B and a 5x5 snowflake shaped filter is shown in Fig. 2C. Each picture can select one filter shape for the luma signal and one filter shape for the chroma signal. In HM-4.0, up to sixteen luma ALF filters and at most one chroma ALF filter can be applied for each picture. In order to allow localization of ALF, there are two modes for luma pixels to select filters. One is a Region-based Adaptation (RA) mode, and the other is a Block-based Adaptation (BA) mode. In addition to the RA and BA for adaptation mode selection at picture level, Coding Units (CUs) larger than a threshold can be further controlled by filter usage flags to enable or disable ALF operations locally. As for the chroma components, since they are relatively flat, no local adaptation is used in HM-4.0, and the two chroma components of a picture share a same filter.

The RA mode simply divides one luma picture into sixteen regions. Once the picture size is known, the sixteen regions are determined and fixed. The regions can be merged, and one filter is used for each region after merging. Therefore, up to sixteen filters per picture are transmitted for the RA mode. On the other hand, the BA mode uses edge activity and direction as a property for each 4x4 block. Calculating the property of a 4x4 block may require neighboring pixels. For example, 8x8 window 210 is used in HM-3.0 and 5x5 window 220 is used in HM-4.0 as shown in Fig. 2D. After properties of 4x4 blocks are calculated, the blocks are classified into fifteen categories. The categories can be merged, and one filter is used for each category after merging. Therefore, up to fifteen filters are transmitted for the BA mode.

Fig. 1A and Fig. 1B illustrate exemplary encoder and decoder implementation according to HM-4.0. The encoding process is divided into two parts. One is LCU-based processing including Intra Prediction (IP) 110, Motion Estimation/Motion Compensation (ME/MC) 112, Transformation (T) 118, Quantization (Q)120, Inverse Quantization (IQ) 124, Inverse Transform (IT) 126, and Reconstruction (REC) 128. The other is picture-based processing including Deblocking Filter (DF) 130, Sample Adaptive Offset (SAO) 131, and Adaptive Loop Filter (ALF) 132. Entropy Encoder 122 may use picture-based processing and indicate the selection using sequence parameter set (SPS), picture parameter set (PPS), or slice-level syntax elements. Entropy Encoder 122 may also use the LCU-based processing and indicate the selection using LCU-level syntax elements. Similarly, the decoding process is also divided into two parts. One is LCU-based processing including Intra Prediction (IP) 110, Motion Compensation (MC) 113, Inverse Quantization (IQ) 124, Inverse Transform (IT) 126, and Reconstruction (REC) 128. The other is picture-based processing including Deblocking Filter (DF) 130, Sample Adaptive Offset (SAO) 131, and Adaptive Loop Filter (ALF) 132. Entropy Decoder 142 may belong to the picture-based processing as indicated by SPS, PPS, or slice-level syntax elements. Entropy Decoder 142 may also belong to the LCU-based processing as indicated by LCU-level syntax elements. In software-based implementation, picture-based processing is easier to implement than LCU-based processing for DF, SAO, and ALF. However, for hardware-based or embedded software-based implementation, picture-based processing is practically unacceptable due to requirement of large picture buffer. On-chip picture buffers may alleviate the high system bandwidth requirement. However, on-chip picture buffers may significantly increase chip cost. On the other hand, off-chip picture buffers will significantly increase external memory access, power consumption, and data access latency. Therefore, it is very desirable to use LCU-based DF, SAO, and ALF for cost-effective encoder and decoder products.

When LCU-based processing is used for DF, SAO, and ALF, the encoding and decoding process can be done LCU by LCU in a raster scan order with an LCU-pipelining fashion for parallel processing of multiple LCUs. In this case, line buffers are required for DF, SAO, and ALF because processing one LCU row requires pixels from the above LCU row. If off-chip line buffers (e.g. DRAM) are used, it will result in substantial increase in external memory bandwidth and power consumption. On the other hand, if on-chip line buffers (e.g. SRAM) are used, the chip area will be increased and accordingly the chip cost will be increased. Therefore, although line buffers are already much smaller than picture buffers, it is still desirable to further reduce line buffers to reduce line buffer cost.

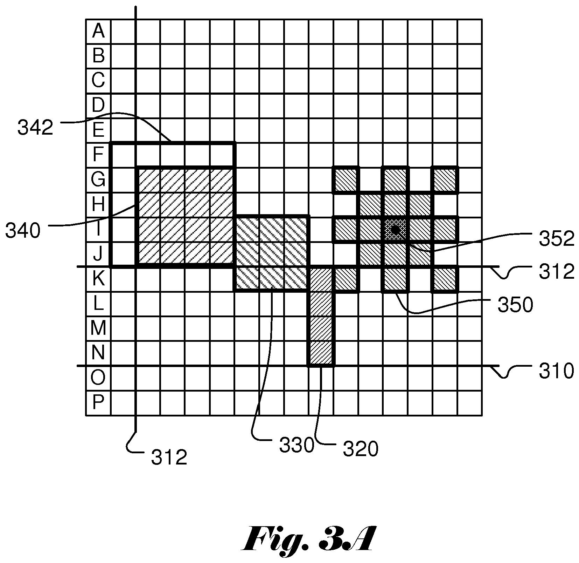

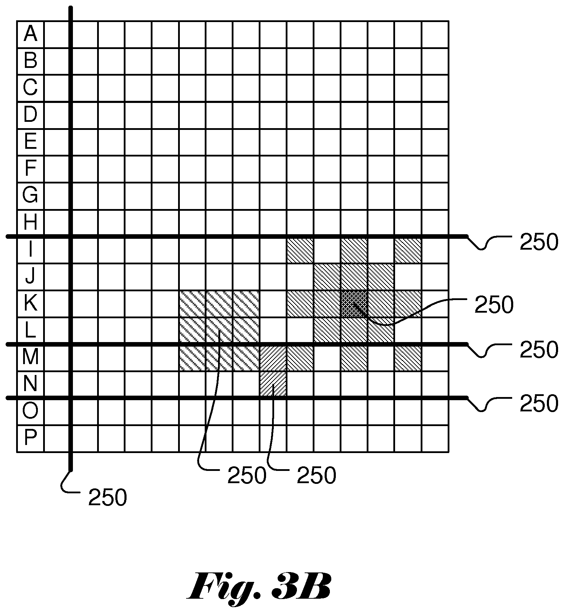

Fig. 3A illustrates an example of line buffer requirement for processing luma component associated with DF, SAO, and ALF in an LCU-based encoding or decoding system. Lines 310 and 312 indicate horizontal and vertical LCU boundaries respectively, where the current LCU is located on the upper side of the horizontal LCU boundary and the right side of the vertical LCU boundary. Lines A through J are first processed by horizontal DF and then by vertical DF. Horizontal DF processing for Lines K through N around the horizontal LCU boundary usually has to wait until the lines below the horizontal LCU boundary becomes available. Otherwise, line buffers to temporarily store horizontally processed DF (H-DF) pixels corresponding to lines K through N for the vertical DF have to be used, which will require four pre-DF pixels and four H-DF pixels on each side of the horizontal LCU boundary to be stored for deriving filter parameters and filtering respectively, as indicated by the 4-pixel stripe 320 in Fig. 3A. The pre-DF pixel refers to reconstructed pixels that are not yet processed by DF at all. Accordingly, in a typical system, four lines (K-N) are used to store pre-DF pixels for subsequent DF processing. Based on the system configuration shown in Fig. 1A and Fig. 1B, SAO is then applied to DF output pixels. Since the vertical DF for lines K-N will not change line K (according to HM-4.0, only three luma pixels at the block boundary may be modified), horizontal DF can be applied to line K in order to allow SAO process on line J, as illustrated by the 3x3 square 330. The H-DF pixels of line K will not be stored in the line buffer and have to be generated from pre-DF pixels again when the lower LCU is processed. However, this will not be an issue for a hardware-based system since the power consumption involved with the operation is very minimal.

After lines A through J are SAO processed, the 4x4 block property, as illustrated by box 340, can be calculated for block-based adaptation processing. According to HM-4.0, the derivation of block property for the 4x4 block requires a 5x5 window as indicated by box 342. Upon the derivation of block properties for 4x4 blocks, ALF can be applied to lines A through H if the snowflake shaped ALF filter is selected. The ALF cannot be applied to line I since it will require SAO-processed data from line K as illustrated by the ALF filter 350 for pixel location 352. After ALF is completed for lines A through H, no further process can be done for the current LCU until the lower LCU becomes available. When the lower LCU becomes available, lines K through P will be first processed by DF and then processed by SAO. Line J will be required when SAO processes line K. However, only EO partial results associated with comparing pixels on line K and line J have to be stored instead of the actual pixel values. The partial results need two bits per pixel, which requires only 20% and 25% of the pixel line buffer for high efficiency (HE) coding system configuration using 10-bit pixels and low complexity (LC) coding system configuration using 8-bit pixels, respectively. Therefore, one line (J) of SAO partial results has to be stored for SAO. The 4x4 block properties for lines I through P can then be calculated and ALF can be applied accordingly.

When line I is filtered, it requires lines G through K, as illustrated by the 5x5 snowflake shaped filter 350 in Fig. 3A. However, derivation of block properties of lines I and J still needs lines F through J. Therefore, five lines (F to J) of SAO output pixels have to be stored for ALF processing. If a filter index line buffer can be used to store BA mode filter selections for lines G through J, it is not necessary to compute the block properties again during ALF processing of lines I and J. Accordingly, the line buffer for one line (F) of SAO output pixels can be eliminated for ALF. The filter index line buffer (4 bits per block) requires only about 10% size of a pixel line buffer. Therefore, four lines (G to J) of SAO output pixels and one line of filter indices (4x4 blocks on lines G to K) have to be stored for ALF. In summary, the entire in-loop filtering requires about 8.3 luma line buffers. When the entire decoding system is considered, since the intra luma prediction already stores one line (N) of pre-DF pixels, this luma line buffer can be shared.

The line buffer requirement for DF, SAO and ALF processing of the chroma components can be derived similarly. The DF processing for the chroma components uses only two pixels at a block boundary to determine DF selection. DF is applied to one pixel at the block boundary. Accordingly, the entire in-loop filtering requires about 6.2 chroma line buffers.

In the above analysis of an exemplary coding system, it has been shown that the line buffer requirements of DF, SAO and ALF processing for the luma and chroma components are 8.3 and 6.2 lines respectively. For HDTV signals, each line may have nearly two thousand pixels. The total line buffer required for the system becomes sizeable. It is desirable to reduce the required line buffers for DF, SAO and ALF processing.

### SUMMARY OF THE INVENTION

A method and apparatus for in-loop processing of reconstructed video are disclosed and are defined in independent claims 1 and 9, respectively. The respective sub-claims define respective embodiments thereof, respectively. The method configures in-loop processing so that it requires no or reduced pixels from other side of a virtual boundary. According to one embodiment of the present invention, the method comprises receiving reconstructed video data, processed reconstructed video data, or a combination of both; determining a virtual boundary related to a video data boundary; determining to-be-processed pixels; and applying in-loop processing to the to-be-processed pixel on one side of the virtual boundary, wherein the in-loop processing is configured to require no pixel or reduced pixels from other side of the virtual boundary. The in-loop processing corresponds to SAO (Sample Adaptive Offset) processing or ALF (Adaptive Loop Filter) processing. The method can be applied to luma component as well as chroma components. When the in-loop processing requires a pixel from the other side of the virtual boundary, one embodiment according to the present invention uses a replacement pixel. The replacement pixel may use a predefined value or an adaptive value. Furthermore, the replacement pixel may be derived from pixels on said one side of the virtual boundary, pixels on the other side of the virtual boundary, or a linear combination or a nonlinear combination of replacement pixels hereinabove. The in-loop processing can also be configured to skip the to-be-processed pixel when the in-loop processing for the to-be-processed pixel requires one or more pixels from other side of the virtual boundary. The in-loop processing can also be configured to change ALF filter shape or filter size when the in-loop processing for the to-be-processed pixel requires one or more source pixels from other side of the virtual boundary. A filtered output can be combined linearly or nonlinearly with the to-be-processed pixel to generate a final filter output, wherein the filtered output is generated by said applying in-loop processing to the to-be-processed pixel. The virtual boundary corresponds to N pixels above a horizontal LCU (Largest Coding Unit) boundary or can correspond to N pixels left from a vertical LCU boundary, wherein N is an integer from 1 to 4. The invention is set out in the appended set of claims; the further examples which do not fall under the scope of the claims and which are called embodiments in the description, are illustrative examples.

### BRIEF DESCRIPTION OF THE DRAWINGS

Fig. 1A illustrates an exemplary adaptive inter/intra video encoding system incorporating DF, SAO and ALF in-loop processing.
Fig. 1B illustrates an exemplary adaptive inter/intra video decoding system incorporating DF, SAO and ALF in-loop processing.
Fig. 2A illustrates Edge Offset (EO) windows corresponding to 0°, 90°, 135°, and 45° being used in HM-4.0 to determine the category for a current pixel to apply SAO (Sample Adaptive Offset).
Fig. 2B illustrates an example of a 9x9 cross shaped filter for ALF.
Fig. 2C illustrates an example of a 5x5 snowflake shaped filter for ALF.
Fig. 2D illustrates an example of a 8x8 window and a 5x5 window for determining 4x4 block property in block-based adaptive processing.
Fig. 3A illustrates an example of line buffer requirement for DF, SAO and ALF processing near a virtual boundary for the luma component.
Fig. 3B illustrates an example of line buffer requirement for DF, SAO and ALF processing near a virtual boundary for the chroma components.
Fig. 4 illustrates an example of horizontal virtual boundaries.
Fig. 5 illustrates an example of vertical virtual boundaries.
Figs. 6-14 illustrate an example of various steps during in-loop processing according to an embodiment of the present invention for pixels above a virtual boundary.
Figs. 15-24 illustrate an example of various steps during in-loop processing according to an embodiment of the present invention for pixels below a virtual boundary.

### DETAILED DESCRIPTION

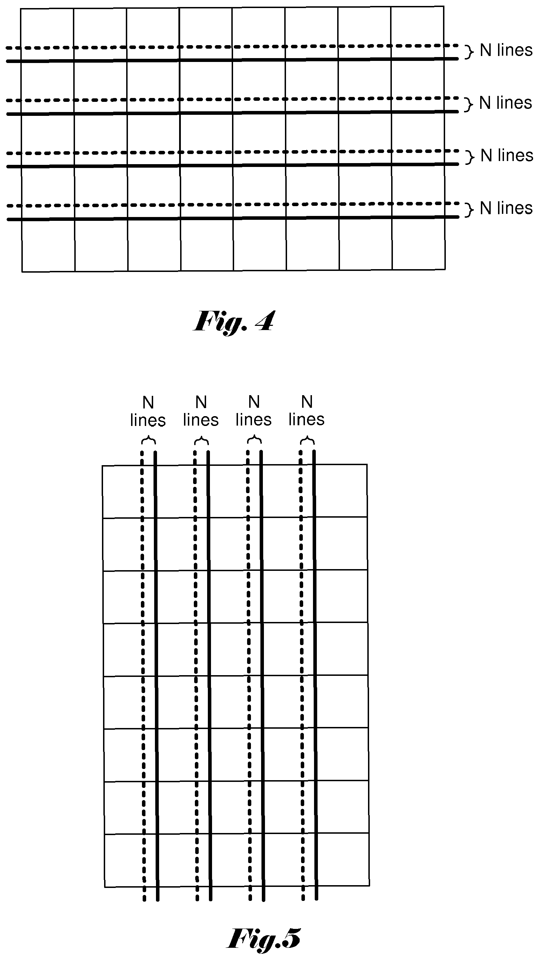

The line buffer analysis shown above indicates that the DF processing requires four line buffers for the luma component and two line buffers for the chroma component. Additional line buffers are required to support SAO and ALF processing. In order to eliminate or reduce the line buffer requirements for SAO and ALF, Virtual Boundary (VB) is disclosed herein. Fig. 4 illustrates an example of VB for horizontal LCU boundaries where the VBs are upward shifted from the horizontal LCU boundaries by N pixels. For each LCU, SAO and ALF can process pixels above the VB before the lower LCU becomes available. However, SAO and ALF cannot process pixels below the VB until the lower LCU becomes available since these pixels are not yet processed by DF yet. As mentioned before, four line buffers are used for the luma component and two line buffers are used for the chroma components to store pre-DF pixels at the bottom of the current LCU. Accordingly, N is equal to 4 for the luma component and N is equal to 2 for each of the chroma components. After the pixels above the VB are processed by DF, the SAO processing is modified for every to-be-processed pixel on one side of a VB to reduce or eliminate data access from the other side of the VB. Accordingly, SAO can be performed for all pixels above the VB without the dependency or with reduced dependency on the lower LCU. Finally, ALF is modified for every to-be-processed pixel on one side of a VB to reduce or eliminate any data access from the other side of the VB.

Fig. 3A can be used to illustrate the use of VB for the luma component to reduce or eliminate line buffer requirement for SAO and ALF, where line 312 indicates the horizontal VB. When the current LCU is processed, lines A through J can be processed by DF (horizontal and vertical). However, lines K through N cannot be processed by vertical DF because the lower LCU is not yet available. If the SAO and ALF processing for lines A through J does not require any pixel below the VB, lines A through J can be processed by SAO and ALF without the lower LCU. When the lower LCU becomes available, lines K through P can be processed by DF. At this time, if the SAO and ALF processing for lines K through P can be modified to reduced or eliminate the dependency on pixels above the VB, line buffers for storing lines F through J can be reduced or eliminated.

While Fig. 4 illustrates an example of horizontal VB processing, the VB processing can also be applied to vertical VB boundaries as shown in Fig. 5, where the vertical VB boundaries are shifted left from the vertical LCU boundaries by N pixels. For the luma component, N is equal to 4; and for the chroma components, N is equal to 2 if MH-4.0 is used.

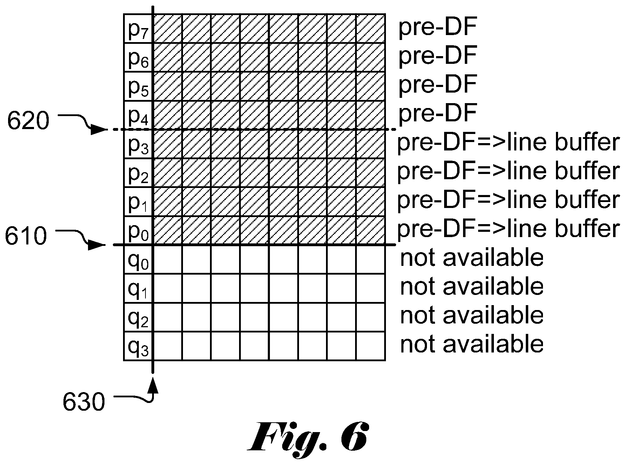

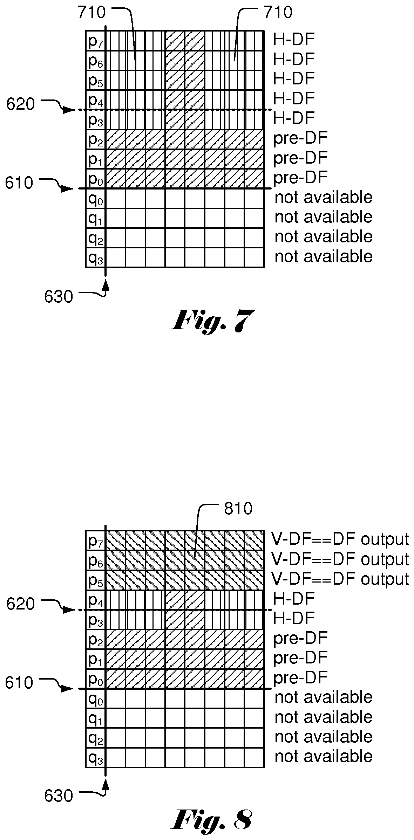

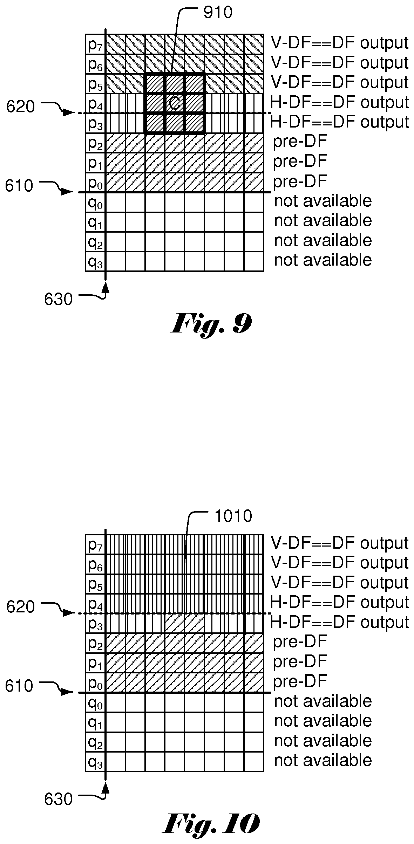

A detailed example of horizontal VB processing is disclosed below. The luma VB processing can be divided into two parts. The first part corresponds to processing of pixels above the VB, while the second part corresponds to processing of pixels below the VB. Figs. 6-14 illustrate the luma VB processing associated with DF, SAO and ALF for to-be-processed pixels above the VB according to an embodiment of the present invention. In Fig. 6, line 610 indicates a horizontal LCU boundary and line 620 indicates a horizontal VB. All pixels of the current LCU have been processed by REC, and four lines (p0 -p3) of pre-DF pixels are stored in DF line buffers. In Fig. 7, pixels above the VB and one line (p3) below the VB are processed by horizontal DF as indicated by shaded areas 710. As mentioned previously, luma DF reads four pixels to evaluate the boundary strength and overwrites up to three pixels on each side of the 8x8 block boundary. In Fig. 8, pixels above the VB are processed by vertical DF to generate DF outputs as indicated by shaded area 810. In Fig. 9, pixels above the VB are processed by SAO. At this moment, line p3 has been processed by horizontal DF in Fig. 7 and will not be changed by vertical DF. Therefore, DF output pixels of line p3 are available for SAO to process line p4. During SAO processing for line p4, each to-be-processed pixel on line p4 (denoted as C) needs to be compared with a neighboring pixel on line p3 (denoted as N) if non-zero degree EO is selected. These SAO partial results can be stored in SAO line buffer instead of the actual pixel data. Each to-be-processed pixel requires two bits to indicate whether the corresponding pixel is greater than, equal to, or smaller than the corresponding neighboring pixel. Other method may also be used to store the partial results efficiently. For example, the partial results of two to-be-processed pixels (C1, C2) and two neighboring pixels (N1, N2) can be compressed from four bits to two bits to represent C1>N1 && C2>N2, C1<N1 && C2<N2, and none of the above. Therefore, the number of SAO pixel line buffers is equivalent to 0.1 and 0.125 in the High Efficiency (HE) mode and Low Complexity (LC) mode, respectively. In Fig. 10, all pixels above the VB have been processed by SAO as indicated shaded area 1010.

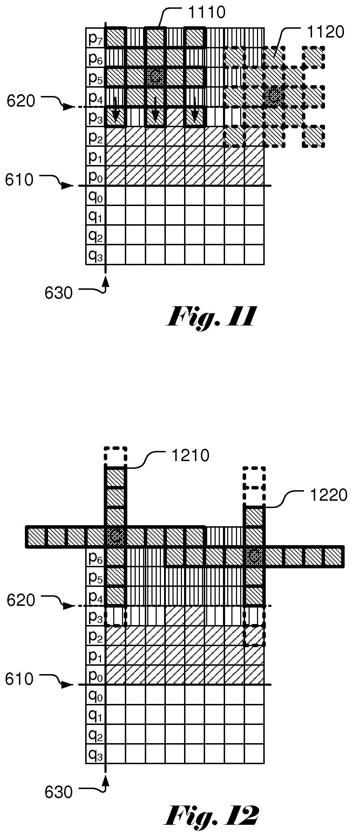

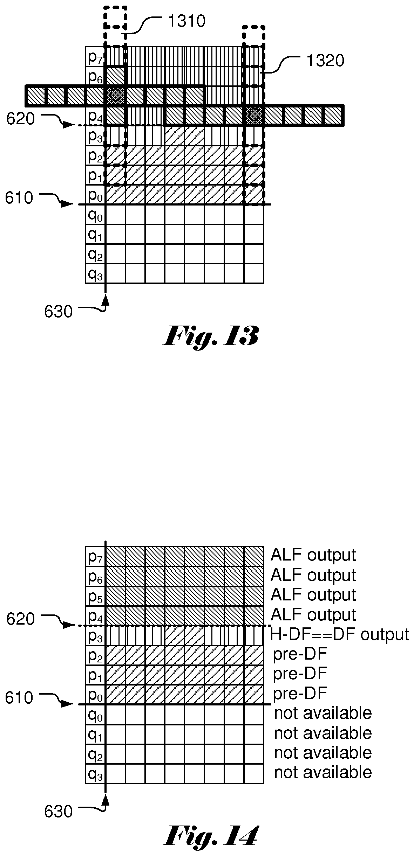

Figs. 11-14 illustrate an example that pixels above the VB are further processed by ALF. During filtering, SAO output pixels below the VB may be needed according to a conventional approach. In these cases, filtering has to be modified according to the present invention. Fig. 11 illustrates an example of ALF using a 5x5 snowflake-shaped filter 1110. The ALF filtering on line p₅ would have to use data below the VB in a conventional approach. However, an embodiment according to the present invention will use padding, averaging, or other means to generate the needed data without reference to any data below the VB. ALF filtering for line p₄ is skipped according to one embodiment of the present invention since the corresponding ALF 1120 will need two lines below the VB (p₃ and p₂). Padding means a pixel on the other side of the VB is replaced by its nearest pixel on the same side of the VB as shown by these arrows in Fig. 11. Examples of data padding include repetitive padding, mirror-based padding with odd symmetry, or mirror-based padding with even symmetry. Averaging means the filtered output pixel is averaged with the filter input pixel as the final ALF output pixel. In other words, the filtered output at pixel C is averaged with pixel C to obtain the final output. Accordingly, Fig. 11 illustrates an example of eliminating the need for pixels from the other side of the VB by using padding and averaging. While averaging serves as an example of linear combination of the filtered output and the to-be-filtered pixel to generate a final ALF output, other linear combination may also be used. For example a weighted sum may be used to combine the filtered output with the to-be-filtered pixel. Furthermore, nonlinear combination may also be used to combine the filtered output with the to-be-filtered pixel. For example, the absolute value of the difference between the filtered output and the to-be-filtered pixel is used to determine how the final filter output should be formed. If the absolute value is very small, the filtered output may be accepted as the final filter output. If the absolute value is very large, the filtered output is disregarded and the to-be-processed pixel is used as the final output. Otherwise, the average between the filtered output and the to-be-filtered pixel is used. Fig. 12 illustrates an example of a 9x9 cross shaped filter selected for ALF. The filter size is reduced to 9x7 as indicated by 1210 and 9x5 as indicated by 1220 for filtering line p₇ and line p₆, respectively. In order to maintain proper filter output level, the discarded coefficients are added to the center pixel to normalize the filter coefficients. Fig. 13 illustrates the 9x9 cross shaped filter is further reduced to 9x3 as indicated by 1310 and 9x1as indicated by 1320 for filtering line p₅ and line p₄, respectively. Again, the discarded coefficients are added to the center pixel. By adding the discarded coefficients to the center pixel will remove the need to change ALF syntax and also serve the purpose of normalization of coefficients without the need of multiplications and divisions. Fig. 14 illustrates the case that all pixels above the VB have been processed by ALF. At this moment, pixels above the VB can be written to a decoded picture buffer. The system is ready to process pixels below the VB when the lower LCU arrives.

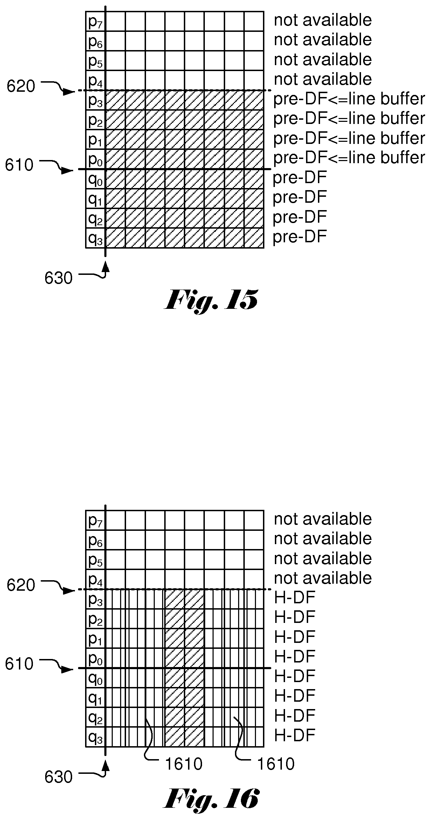

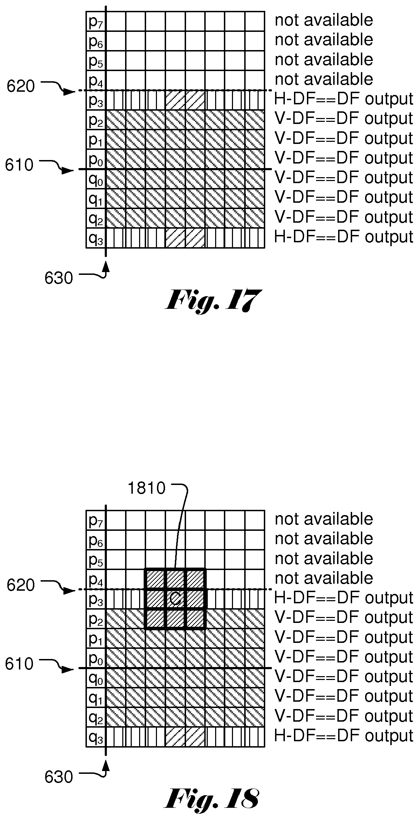

Figs. 15-24 illustrate an example of luma VB processing for pixels below the VB according to an embodiment of the present invention. Fig.15 illustrates the state that four lines (p₀-p₃) of pre-DF pixels are read from the DF line buffers. Fig. 16 illustrates the case that pixels below the VB are first processed by horizontal DF as indicated by shaded areas 1610. As mentioned before, calculating horizontal DF decisions for lines p₀-p₃ requires pre-DF pixels of lines p₀-p₇. In order to reduce line buffer requirement for storing lines p₄-p₇, these horizontal DF decisions are computed and stored in a decision line buffer during the horizontal DF for lines p₃-p₇ in Fig. 7. The decision buffer only requires one bit per 8x8 block and can be simply implemented as on-chip registers or SRAMs. Fig. 17 illustrates the state that pixels below the VB are processed by vertical DF. At this time, the DF processing is completed for lines p₀-p₃ and lines q₀-q₃. It is noted that vertical DF decisions use pre-DF pixels. Therefore the vertical DF decisions at the horizontal LCU boundary have to be calculated before the horizontal DF is performed as shown in Fig. 16.

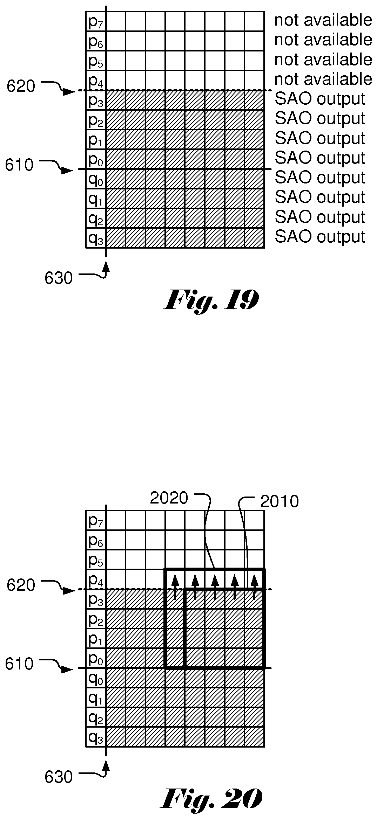

Fig. 18 illustrates that SAO is performed after DF processing is completed for pixels below the VB, where SAO 1810 is being applied to pixel C of line p₃. During SAO processing for line p₄ in Fig. 9, each pixel on line p₄ (regarded as a current pixel C) was compared with a neighboring pixel on line p₃ (denoted as N) for non-zero degree EO. These SAO partial results were stored in SAO line buffer according to one embodiment of the present invention. Now, the partial results can be read from SAO line buffer for SAO processing of line p₃. When line p₃ is processed, for each to-be-processed pixel (pixel C in Fig. 18) of line p₃, the partial result associated with the relationship between the current pixel C and a neighboring pixel in line p₄ was stored during SAO processing of pixels above the VB according to an embodiment of the present invention. However, the pixel in line p₄ was regarded as a current pixel C while the pixel in line p3 was regarded as a neighboring pixel N. Two bits are needed to indicate the relationship as one of C>N, C<N, and C==N. In another embodiment of the present invention, partial results corresponding to relationship between two to-be-processed pixels on line p₃ (N1, N2) and two corresponding pixels on line p₄ (C1, C2) are represented in two bits from SAO line buffer to indicate C1>N1 && C2>N2, C1<N1 && C2<N2, or none of the above. If none of the above is selected, C1==N1 && C2==N2 will be used in the EO process. Fig. 19 illustrates that all pixels below the current VB (and above the next VB) have been processed by SAO.

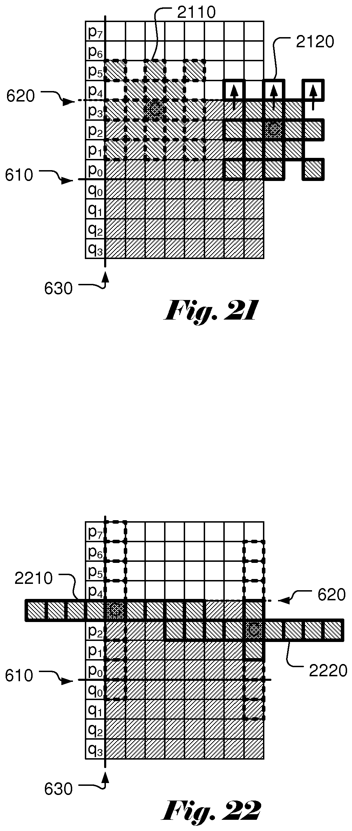

Figs. 20-23 illustrate exemplary steps of ALF processing on pixels below the VB. According to a conventional approach, calculating ALF block properties of lines p₀-p₃ requires SAO output pixels of lines p₀-p₄. However, SAO output pixels of line p₄ are not available any more. Therefore, an embodiment according to the present invention is shown in Fig. 20 to remove the dependency of ALF processing on pixels across the VB. Fig. 20 illustrates an example of repetitive padding in the vertical direction, as indicated by these arrows, to generate pixels of line p₄ from SAO output pixels of line p₃ in order to determine block property of 4x4 block 2010 based on 5x5 window 2020. During filtering, SAO output pixels above the VB may also be needed according to a conventional approach. In these cases, filtering has to be modified so that the dependency of ALF processing on pixels across the VB can be removed. Fig. 21 illustrates an example where a 5x5 snowflake shaped filter is selected for ALF. ALF filtering 2110 for line p₃ (ALF filter for pixel C of line p₃ is indicated by 2110) is skipped, and ALF filtering for line p₂ (ALF filter for pixel C of line p₂ is indicated by 2120) uses padding and averaging. The meaning of padding and averaging has been described in the specification associated with Fig. 11.

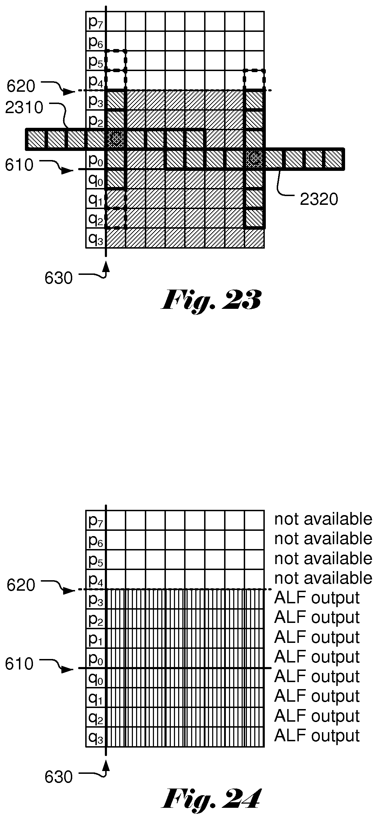

Fig. 22 illustrates the case where a 9x9 cross shaped filter is selected for ALF. According to one embodiment of the present invention, the filter size is reduced to 9x1(as indicated by 2210) and 9x3 (as indicated by 2220) for filtering line p₃ and line p₂, respectively to eliminate the dependency of ALF processing on SAO processed data above the VB. For the purpose of filter coefficient normalization, the discarded coefficients will be added to the center pixel. Fig. 23 illustrates an embodiment according to the present invention where the filter size is reduced to 9x5 (as indicated by 2310) and 9x7(as indicated by 2320) for filtering line p₁ and line p₀, respectively. Again, for the purpose of filter coefficient normalization, the discarded coefficients will be added to the center pixel. Fig. 24 illustrates the case that all pixels below the VB (and above the next VB) have been processed by ALF. At this moment, pixels below the VB (and above the next VB) can be written to a decoded picture buffer.

The luma VB processing shown in Figs. 6-24 illustrates one embodiment according to the present invention. The specific exemplary techniques used in various steps of the SAO/ALF processing to remove the dependency across the VB are summarized in Table 2. In Fig. 7 and Fig. 16, it can be seen that line p₃ is processed by horizontal DF twice. This only happens in LCU-based processing, not in picture-based processing. The redundant computation causes very minor impact on hardware because the DF hardware has been already allocated and the DF is not the throughput bottleneck of the system. The redundant computation can be avoided by optionally adding one line buffer to store H-DF pixels of line p₃.

**Table 2.**

| Operation | To-Be-Processed Line | Design Principle |
|---|---|---|
| SAO pixel classification | 1st line above the VB | Unchanged |
| ALF snowflake filtering | 1st line above the VB | Skip filtering |
| ALF snowflake filtering | 2nd line above the VB | Use padding and averaging |
| ALF cross filtering | 1st line above the VB | Reduce filter size |
| ALF cross filtering | 2nd line above the VB | Reduce filter size |
| ALF cross filtering | 3rd line above the VB | Reduce filter size |
| ALF cross filtering | 4th line above the VB | Reduce filter size |
| SAO pixel classification | 1st line below the VB | Use SAO partial results of 1st line above the VB |
| ALF block property calculation | 1st line below the VB | Use padding |
| ALF snowflake filtering | 1st line below the VB | Skip filtering |
| ALF snowflake filtering | 2nd line below the VB | Use padding and averaging |
| ALF cross filtering | 1st line below the VB | Reduce filter size |
| ALF cross filtering | 2nd line below the VB | Reduce filter size |
| ALF cross filtering | 3rd line below the VB | Reduce filter size |
| ALF cross filtering | 4th line below the VB | Reduce filter size |

As shown in the above detailed example, if the VB processing technique is applied to ALF to remove dependency of ALF processing on pixels of the other side of the VB, the line buffers for the entire in-loop filtering are reduced from 8.3 lines to 4.2 lines for the luma component and from 6.2 lines to 2.2 lines for the chroma components. If the VB processing is applied to both SAO and ALF, the line buffers for the entire in-loop filtering become 4.1lines for the luma component and 2.1 lines for the chroma components. In the above example, the ALF or SAO are modified to remove the dependency on pixels of the other side of the VB. It is also possible to practice the present invention to modify ALF and/or SAO so that the dependency on pixels on the other side of the VB is reduced.

The example of VB processing for SAO and ALF according to the present invention shown in Figs. 6-24 fully removes the need for any additional line buffers, beyond the line buffers allocated for DF processing, except for small buffer for some SAO partial results and DF decisions. However, another embodiment according to the present invention may also reduce the dependency of data for SAO and ALF across the VB so that the additional line buffers beyond what has been allocated for DF can be reduced. While a 3x3 window for SAO classification is used in the above example, other window shapes and/or sizes may also be used for deriving the classification for adaptive SAO processing. While a 9x9 cross shaped filter or a 5x5 snowflake shaped filter is used as an example for ALF processing, other filter shapes or filter sizes may also be used to practice the present invention. Furthermore, SAO and ALF are illustrated as two in-loop processing in addition to DF, the present invention may also be practiced for an encoding or decoding system using other types of in-loop processing to reduce or eliminate the associated line buffers.

While the steps in Figs. 6-24 are used to illustrate an example of luma VB processing according to the present invention, steps for practicing the present invention on chroma components can be derived similarly.

The system performance associated with the above example is compared against a conventional system without luma VB processing. Test results indicate that the system with the luma and chroma VB processing results in about the same performance as a convention system in termed of BD-rate. BD-rate is a well-known performance measurement in the video coding field. While resulting in above the same performance, the exemplary system according to the present invention substantially reduces the line buffer requirement. The advantage of the VB processing according to the present invention is apparent.

In the above exemplary VB processing, SAO and ALF are used as examples of adaptive in-loop processing. An adaptive in-loop processing usually involves two steps, where the first step is related to determination of a category using neighboring pixels around a to-be-processed pixel and the second step is to apply the in-loop processing adaptively according to the determined category. The process of determination of a category may involve pixels across the VB. An embodiment according to the present invention reduces or removes the dependency on pixels across the VB. Another embodiment according to the present invention may skip the process of determination of a category if the process relies on pixels across the VB. When the process of category determination is skipped, the corresponding in-loop processing may be skipped as well. Alternatively, the in-loop processing can be performed based on the classification derived for one or more neighboring pixels on the same side of the VB.

Embodiment of video coding systems incorporating Virtual Buffer (VB) processing according to the present invention as described above may be implemented in various hardware, software codes, or a combination of both. For example, an embodiment of the present invention can be a circuit integrated into a video compression chip or program codes integrated into video compression software to perform the processing described herein. An embodiment of the present invention may also be program codes to be executed on a Digital Signal Processor (DSP) to perform the processing described herein. The invention may also involve a number of functions to be performed by a computer processor, a digital signal processor, a microprocessor, or field programmable gate array (FPGA). These processors can be configured to perform particular tasks according to the invention, by executing machine-readable software code or firmware code that defines the particular methods embodied by the invention. The software code or firmware codes may be developed in different programming languages and different format or style. The software code may also be compiled for different target platform. However, different code formats, styles and languages of software codes and other means of configuring code to perform the tasks in accordance with the invention will not depart from the scope of the invention.

The invention may be embodied in other specific forms without departing from its essential characteristics. The described examples are to be considered in all respects only as illustrative and not restrictive. The scope of the invention is therefore, indicated by the appended claims rather than by the foregoing description. All changes which come within the meaning and range of equivalency of the claims are to be embraced within their scope.

## Claims

1. A method for in-loop processing of reconstructed video, the method comprising:
receiving reconstructed video data;
determining to-be-processed pixels associated with the reconstructed video data;
**characterized by**
determining a virtual boundary related to a video data boundary; and
applying in-loop processing to the to-be-processed pixel on one side of the virtual boundary, wherein the in-loop processing is configured to require no pixel from other side of the virtual boundary;
wherein the in-loop processing corresponds to SAO (Sample Adaptive Offset) processing or ALF (Adaptive Loop Filter) processing;
wherein the virtual boundary is upward shifted from a horizontal block boundary by N pixels, wherein the virtual boundary is N pixels above a horizontal LCU (Largest Coding Unit) boundary and N is an integer from 1 to 4.

2. The method of Claim 1, wherein the reconstructed video data corresponds to a luma component or a chroma component.

3. The method of Claim 1, wherein , if the in-loop processing of the to-be- processed pixel on said one side of the virtual boundary requires a first pixel from the other side of the virtual boundary, the first pixel from the other side of the virtual boundary is replaced by a first replacement pixel with a predefined value, a second replacement pixel with an adaptive value, a third replacement pixel derived from one or more second pixels on said one side of the virtual boundary, or a combination of replacement pixels hereinabove.

4. The method of Claim 3, wherein the third replacement pixel is derived based on data padding, wherein said data padding corresponds to repetitive padding, mirror-based padding with odd symmetry, or mirror-based padding with even symmetry.

5. The method of Claim 1, wherein the in-loop processing is configured to skip the to-be-processed pixel when the in-loop processing for the to-be-processed pixel requires one or more pixels from other side of the virtual boundary.

6. The method of Claim 1, wherein the in-loop processing is configured to change filter shape or filter size when the in-loop processing for the to-be-processed pixel requires one or more pixels from other side of the virtual boundary, wherein the in-loop processing corresponds to ALF (Adaptive Loop Filter) processing.

7. The method of Claim 1, wherein a filtered output is combined linearly or nonlinearly with the to-be-processed pixel to generate a final filter output, wherein the filtered output is generated by said applying in-loop processing to the to-be-processed pixel.

8. The method of Claim 1, wherein the reconstructed video data comprises processed reconstructed video data, unprocessed reconstructed video data, or a combination of both.

9. An apparatus for in-loop processing of reconstructed video, the apparatus **characterized by**
means for receiving reconstructed video data; means for determining a virtual boundary related to a video data boundary; and
means for applying in-loop processing to to-be-processed pixel on one side of the virtual boundary, wherein the in-loop processing is configured to require no pixel or reduced pixels from other side of the virtual boundary and wherein the to-be-processed pixels are associated with the reconstructed video data;
wherein the in-loop processing corresponds to SAO (Sample Adaptive Offset) processing or ALF (Adaptive Loop Filter) processing;
wherein the virtual boundary is upward shifted from a horizontal block boundary by N pixels, wherein the virtual boundary is N pixels above a horizontal LCU (Largest Coding Unit) boundary and N is an integer from 1 to 4.

10. The apparatus of Claim 9, wherein the reconstructed video data corresponds to a luma component or a chroma component.

11. The apparatus of Claim 9, wherein , if the in-loop processing of the to-be- processed pixel on said one side of the virtual boundary requires a first pixel from the other side of the virtual boundary, the first pixel from the other side of the virtual boundary is replaced by a first replacement pixel with a predefined value, a second replacement pixel with an adaptive value, a third replacement pixel derived from one or more second pixels on said one side of the virtual boundary, or a linear combination or a nonlinear combination of replacement pixels hereinabove.

12. The apparatus of Claim 9, wherein the third replacement pixel is derived based on data padding, wherein said data padding corresponds to repetitive padding, mirror-based padding with odd symmetry, or mirror-based padding with even symmetry.

13. The apparatus of Claim 9, wherein the in-loop processing is configured to skip the to-be-processed pixel when the in-loop processing for the to-be-processed pixel requires one or more pixels from other side of the virtual boundary.

14. The apparatus of Claim 9, wherein the in-loop processing is configured to change filter shape or filter size when the in-loop processing for the to-be-processed pixel requires one or more pixels from other side of the virtual boundary, wherein the in-loop processing corresponds to ALF (Adaptive Loop Filter) processing.

15. The apparatus of Claim 9, wherein a filtered output is combined with the to-be-processed pixel to generate a final filter output, wherein the filtered output is generated by said means for applying in-loop processing to the to-be-processed pixel.

## Patentansprüche

1. Verfahren zur In-Loop-Verarbeitung von rekonstruiertem Video, wobei das Verfahren umfasst:
Empfangen von rekonstruierten Videodaten;
Bestimmen von zu verarbeitenden Pixeln, die den rekonstruierten Videodaten zugeordnet sind;
**gekennzeichnet durch**
Bestimmen einer virtuellen Grenze, die sich auf eine Videodatengrenze bezieht; und
Anwenden einer In-Loop-Verarbeitung auf das zu verarbeitende Pixel auf einer Seite der virtuellen Grenze, wobei die In-Loop-Verarbeitung konfiguriert ist, kein Pixel von der anderen Seite der virtuellen Grenze zu benötigen;
wobei die In-Loop-Verarbeitung zu SAO (Sample Adaptive Offset) -Verarbeitung oder ALF (Adaptive Loop Filter) -Verarbeitung korrespondiert;
wobei die virtuelle Grenze von einer horizontalen Blockgrenze um N Pixel nach oben verschoben ist, wobei die virtuelle Grenze N Pixel oberhalb einer horizontalen LCU (größte Kodiereinheit) -Grenze ist und N eine ganze Zahl von 1 bis 4 ist.

2. Verfahren nach Anspruch 1, wobei die rekonstruierten Videodaten zu einer Luma-Komponente oder zu einer Chroma-Komponente korrespondieren.

3. Verfahren nach Anspruch 1, wobei, wenn die In-Loop-Verarbeitung des zu verarbeitenden Pixels auf der einen Seite der virtuellen Grenze ein erstes Pixel von der anderen Seite der virtuellen Grenze benötigt, das erste Pixel von der anderen Seite der virtuellen Grenze durch ein erstes Ersatzpixel mit einem vordefinierten Wert, ein zweites Ersatzpixel mit einem adaptiven Wert, ein drittes Ersatzpixel, das von einem zweiten Pixel oder mehreren zweiten Pixeln auf der einen Seite der virtuellen Grenze abgeleitet ist, oder durch eine Kombination von den vorgenannten Ersatzpixeln ersetzt wird.

4. Verfahren nach Anspruch 3, wobei das dritte Ersatzpixel basierend auf einer Datenfüllung abgeleitet wird, wobei die Datenfüllung zu repetitiven Füllungen, spiegelbasierten Füllungen mit ungerader Symmetrie oder spiegelbasierten Füllungen mit gerader Symmetrie korrespondiert.

5. Verfahren nach Anspruch 1, wobei die In-Loop-Verarbeitung konfiguriert ist, das zu verarbeitende Pixel zu überspringen, wenn die In-Loop-Verarbeitung für das zu verarbeitende Pixel ein oder mehrere Pixel von der anderen Seite der virtuellen Grenze benötigt.

6. Verfahren nach Anspruch 1, wobei die In-Loop-Verarbeitung konfiguriert ist, eine Filterform oder eine Filtergröße zu ändern, wenn die In-Loop-Verarbeitung für das zu verarbeitende Pixel ein oder mehrere Pixel von der anderen Seite der virtuellen Grenze benötigt, wobei die In-Loop-Verarbeitung zu ALF (Adaptive Loop Filter) -Verarbeitung korrespondiert.

7. Verfahren nach Anspruch 1, wobei eine gefilterte Ausgabe linear oder nichtlinear mit dem zu verarbeitenden Pixel kombiniert wird, um eine endgültige Filterausgabe zu erzeugen, wobei die gefilterte Ausgabe durch die Anwendung der In-Loop-Verarbeitung auf das zu verarbeitende Pixel erzeugt wird.

8. Verfahren nach Anspruch 1, wobei die rekonstruierten Videodaten verarbeitete rekonstruierte Videodaten, unverarbeitete rekonstruierte Videodaten oder eine Kombination aus beidem umfassen.

9. Vorrichtung zur In-Loop-Verarbeitung von rekonstruiertem Video,
**gekennzeichnet durch**:
Mittel zum Empfangen von rekonstruierten Videodaten; Mittel zum Bestimmen einer virtuellen Grenze, die sich auf eine Videodatengrenze bezieht; und
Mittel zum Anwenden der In-Loop-Verarbeitung auf zu verarbeitende Pixel auf einer Seite der virtuellen Grenze, wobei die In-Loop-Verarbeitung konfiguriert ist, kein Pixel oder reduzierte Pixel von der anderen Seite der virtuellen Grenze zu benötigen, und wobei die zu verarbeitenden Pixel den rekonstruierten Videodaten zugeordnet sind;
wobei die In-Loop-Verarbeitung zu SAO (Sample Adaptive Offset) -Verarbeitung oder ALF (Adaptive Loop Filter) -Verarbeitung korrespondiert;
wobei die virtuelle Grenze von einer horizontalen Blockgrenze um N Pixel nach oben verschoben ist, wobei die virtuelle Grenze N Pixel oberhalb einer horizontalen LCU (größte Kodiereinheit) -Grenze ist und N eine ganze Zahl von 1 bis 4 ist.

10. Vorrichtung nach Anspruch 9, wobei die rekonstruierten Videodaten zu einer Luma-Komponente oder zu einer Chroma-Komponente korrespondieren.

11. Vorrichtung nach Anspruch 9, wobei, wenn die In-Loop-Verarbeitung des zu verarbeitenden Pixels auf der einen Seite der virtuellen Grenze ein erstes Pixel von der anderen Seite der virtuellen Grenze benötigt, das erste Pixel von der anderen Seite der virtuellen Grenze durch ein erstes Ersatzpixel mit einem vordefinierten Wert, ein zweites Ersatzpixel mit einem adaptiven Wert, ein drittes Ersatzpixel, das von einem zweiten Pixel oder mehreren zweiten Pixeln auf der einen Seite der virtuellen Grenze abgeleitet ist, oder eine lineare Kombination oder eine nichtlineare Kombination von vorgenannten Ersatzpixeln ersetzt wird.

12. Vorrichtung nach Anspruch 9, wobei das dritte Ersatzpixel basierend auf einer Datenfüllung abgeleitet wird, wobei die Datenfüllung zu repetitiven Füllungen, spiegelbasierten Füllungen mit ungerader Symmetrie oder spiegelbasierten Füllungen mit gerader Symmetrie korrespondiert.

13. Vorrichtung nach Anspruch 9, wobei die In-Loop-Verarbeitung konfiguriert ist, das zu verarbeitende Pixel zu überspringen, wenn die In-Loop-Verarbeitung für das zu verarbeitende Pixel ein oder mehrere Pixel von der anderen Seite der virtuellen Grenze benötigt.

14. Vorrichtung nach Anspruch 9, wobei die In-Loop-Verarbeitung konfiguriert ist, eine Filterform oder eine Filtergröße zu ändern, wenn die In-Loop-Verarbeitung für das zu verarbeitende Pixel ein oder mehrere Pixel von der anderen Seite der virtuellen Grenze benötigt, wobei die In-Loop-Verarbeitung zu ALF (Adaptive Loop Filter) -Verarbeitung korrespondiert.

15. Vorrichtung nach Anspruch 9, wobei eine gefilterte Ausgabe mit dem zu verarbeitenden Pixel kombiniert wird, um eine endgültige Filterausgabe zu erzeugen, wobei die gefilterte Ausgabe durch die Mittel zum Anwenden der In-Loop-Verarbeitung auf das zu verarbeitende Pixel erzeugt wird.

## Revendications

1. Procédé de traitement en boucle d'une vidéo reconstruite, le procédé comprenant le fait :
de recevoir des données vidéo reconstruites ;
de déterminer des pixels à traiter associés aux données vidéo reconstruites ;
**caractérisé par** le fait
de déterminer une limite virtuelle liée à une limite de données vidéo ; et
d'appliquer un traitement en boucle au pixel à traiter sur un côté de la limite virtuelle, où le traitement en boucle est configuré de manière à ne nécessiter aucun pixel de l'autre côté de la limite virtuelle ;
dans lequel le traitement en boucle correspond au traitement SAO (Décalage Adaptatif d'Échantillon) ou au traitement ALF (Filtre de Boucle Adaptatif);
dans lequel la limite virtuelle est décalée vers le haut par rapport à une limite de bloc horizontale de N pixels, où la limite virtuelle se trouve à N pixels au-dessus d'une limite LCU (Unité de Codage La Plus Grande) horizontale et N est un nombre entier compris entre 1 et 4.

2. Procédé de la revendication 1, dans lequel les données vidéo reconstruites correspondent à une composante de luminance ou à une composante de chrominance.

3. Procédé de la revendication 1, dans lequel, si le traitement en boucle du pixel à traiter sur ledit côté de la limite virtuelle nécessite un premier pixel de l'autre côté de la limite virtuelle, le premier pixel de l'autre côté de la limite virtuelle est remplacé par un premier pixel de remplacement avec une valeur prédéfinie, un deuxième pixel de remplacement avec une valeur adaptative, un troisième pixel de remplacement dérivé d'un ou de plusieurs deuxième(s) pixel(s) sur ledit côté de la limite virtuelle, ou une combinaison de pixels de remplacement ci-dessus.

4. Procédé de la revendication 3, dans lequel le troisième pixel de remplacement est dérivé sur la base d'un bourrage de données, où ledit bourrage de données correspond à un bourrage répétitif, un bourrage à miroir avec symétrie impaire, ou un bourrage à miroir avec symétrie paire.

5. Procédé de la revendication 1, dans lequel le traitement en boucle est configuré pour sauter le pixel à traiter, lorsque le traitement en boucle pour le pixel à traiter nécessite un ou plusieurs pixel(s) de l'autre côté de la limite virtuelle.

6. Procédé de la revendication 1, dans lequel le traitement en boucle est configuré pour changer la forme de filtre ou la taille de filtre lorsque le traitement en boucle pour le pixel à traiter nécessite un ou plusieurs pixel(s) de l'autre côté de la limite virtuelle, où le traitement en boucle correspond au traitement ALF (Filtre de Boucle Adaptatif).

7. Procédé de la revendication 1, dans lequel une sortie filtrée est combinée de manière linéaire ou non linéaire avec le pixel à traiter pour générer une sortie de filtre finale, où la sortie filtrée est générée par ladite application du traitement en boucle au pixel à traiter.

8. Procédé de la revendication 1, dans lequel les données vidéo reconstruites comprennent des données vidéo reconstruites traitées, des données vidéo reconstruites non traitées ou une combinaison des deux.

9. Appareil pour le traitement en boucle de vidéo reconstruite, l'appareil étant **caractérisé par** :
un moyen pour recevoir des données vidéo reconstruites ; un moyen pour déterminer une limite virtuelle liée à une limite de données vidéo ; et
un moyen pour appliquer un traitement en boucle à un pixel à traiter sur un côté de la limite virtuelle, où le traitement en boucle est configuré de manière à ne nécessiter aucun pixel ou à nécessiter des pixels réduits de l'autre côté de la limite virtuelle et où les pixels à traiter sont associés aux données vidéo reconstruites ;
dans lequel le traitement en boucle correspond au traitement SAO (Décalage Adaptatif d'Échantillon) ou au traitement ALF (Filtre de Boucle Adaptatif) ;
dans lequel la limite virtuelle est décalée vers le haut par rapport à une limite de bloc horizontale de N pixels, où la limite virtuelle se trouve à N pixels au-dessus d'une limite LCU (Unité de Codage La Plus Grande) horizontale et N est un nombre entier compris entre 1 et 4.

10. Appareil de la revendication 9, dans lequel les données vidéo reconstruites correspondent à une composante de luminance ou à une composante de chrominance.

11. Appareil de la revendication 9, dans lequel, si le traitement en boucle du pixel à traiter sur ledit côté de la limite virtuelle nécessite un premier pixel de l'autre côté de la limite virtuelle, le premier pixel de l'autre côté de la limite virtuelle est remplacé par un premier pixel de remplacement avec une valeur prédéfinie, un deuxième pixel de remplacement avec une valeur adaptative, un troisième pixel de remplacement dérivé d'un ou de plusieurs deuxième(s) pixel(s) sur ledit côté de la limite virtuelle, ou une combinaison linéaire ou une combinaison non linéaire de pixels de remplacement ci-dessus.

12. Appareil de la revendication 9, dans lequel le troisième pixel de remplacement est dérivé sur la base d'un bourrage de données, où ledit bourrage de données correspond à un bourrage répétitif, un bourrage à miroir avec symétrie impaire, ou un bourrage à miroir avec symétrie paire.

13. Appareil de la revendication 9, dans lequel le traitement en boucle est configuré pour sauter le pixel à traiter, lorsque le traitement en boucle pour le pixel à traiter nécessite un ou plusieurs pixel(s) de l'autre côté de la limite virtuelle.

14. Appareil de la revendication 9, dans lequel le traitement en boucle est configuré pour changer la forme de filtre ou la taille de filtre lorsque le traitement en boucle pour le pixel à traiter nécessite un ou plusieurs pixel(s) de l'autre côté de la limite virtuelle, où le traitement en boucle correspond au traitement ALF (Filtre de Boucle Adaptatif).

15. Appareil de la revendication 9, dans lequel une sortie filtrée est combinée avec le pixel à traiter pour générer une sortie de filtre finale, où la sortie filtrée est générée par ledit moyen pour appliquer un traitement en boucle au pixel à traiter.
